# EUROPEAN PATENT SPECIFICATION

(11) **EP 3 068 682 B1**
(45) Date of publication and mention of the grant of the patent: **17.10.2018**
(21) Application number: 14816399.1
(22) Date of filing: 12.11.2014
(51) Int. Cl.: B62M 1/16, B62M 1/18, B62M 1/20, B62K 5/02, B62K 5/10

(54) **VEHICLE FOR EXERCISE AND LOCOMOTION**
ÜBUNGS- UND FORTBEWEGUNGSFAHRZEUG
VÉHICULE À DES FINS D'EXERCICE ET DE DÉPLACEMENT

(30) Priority: 12.11.2013 PT 10728813
(43) Date of publication of application: 21.09.2016
(73) Proprietor: Solien - Soluções Integradas de Engenharia Lda., 3046-656 Taveiro Taveiro (PT)
(72) Inventor: AZEVEDO, Hugo, P-3140-302 Pereira MMV (PT); VENDINHA DE JESUS FERREIRA, Renato Miguel, P-3200-075 Lousã (PT)
(74) Representative: Ferreira, Maria Silvina
(86) International application number: PCT/IB2014/065989
(87) International publication number: WO 2015/071838

(56) References cited:
- EP-A1- 0 461 286
- GB-A- 2 481 274
- US-A- 4 632 414
- US-B1- 6 206 394
- US-B1- 7 654 545

## Description

### Scope of the invention

The present invention refers to a wheeled equipment mechanically propelled by the user and which may have an additional source of energy, referring more specifically to the field of physical exercise equipment that can be used for locomotion.

### Background of the Invention

There is an increasing demand of the public in general in relation to more healthy living habits, and the practice of sport in this context has gained expression. The use of gyms is one of the solutions that has been adopted by many people. In the cardio section these spaces is almost mandatory presence of ergometers, which are devices that have in their origin the movement of one of the oldest sports and the one that involves more physical effort since it uses most of the major muscle groups of the human body, rowing. The big disadvantage is that this equipment presents the fact of being static and its use being generally confined to a closed space, which raises the question "What if ergometers could move?!"

Example of a reply to the question set out above can be found in US patent No. 7 654 545. This document describes an apparatus for exercising, with three wheels, driven by the force of the arms and legs of the user, containing the wheel suspension means in order to render the movement of the vehicle smoother. It also has a chain drive and cables and direction changes are made through the handlebars and the user's feet, and a trough where the seat slides.

Document EP0461286A1 shows the preamble of claim 1.

### Advantages of the Invention

The main advantage of the apparatus of the invention is to provide a device which can, at the same time, be used as an alternative means of transportation, and also allows to perform physical activity in open spaces.

### Brief Description of the Drawings

These and other features can be readily understood by the accompanying drawings, which should be considered as examples and not as restrictive in any way of the scope of the invention. In the drawings, for illustrative purposes, the measurements of some of the elements may be exaggerated and not drawn to scale. The absolute dimensions and the relative dimensions do not correspond to the real relationships for carrying out the invention.
Figure 1 shows a perspective view of an embodiment of the apparatus of the invention.
Figure 2 shows a perspective view of an embodiment of the main body (A) of the apparatus of the invention.
Figure 3 shows a perspective view of an embodiment of the sliding seat (B) of the apparatus of the invention.
Figure 4 shows a perspective view of a first embodiment of the propulsion shaft (B4) of the equipment of the invention. Figure 4b shows a sectional view of the handlebar (E) and the placement of the upper bearings (B.4.2).
Figure 5 shows a perspective view of a second embodiment of the propulsion shaft (B4) of the equipment of the invention. Figure 5b shows a sectional view of the handlebar (E) and the placement of the upper bearings (B.4.2).
Figures 6 and 7 show, respectively, a front view and a side view of an embodiment of the handlebar (E) of the apparatus of the invention.
Figure 8 shows a decomposition of the movement of the sliding seat (B), of an embodiment of the apparatus of the invention.
Figure 9 shows a sectional view of the main body (A) where it is possible to view the guide element of the sliding seat (B) comprising a guide (B.7) and runners (B.6), of an embodiment of apparatus of the invention.
Figure 10 shows a perspective view of an embodiment of the connection between the main body (A) and the sliding seat (B) being visible the mat (B.8) articulated for the passage of cables and hydraulic tubes, of the apparatus of the invention.
Figure 11 shows a sectional view of an embodiment of the link between the skids (B.6) consisting of a drive ball (B.6.1) and the rail (A.1) by partial clamping, of the equipment of the invention.
Figure 12 shows a side view of an embodiment of the elements that constitute the power transmission system (F) to the intermediate shaft (3), of the equipment of the invention.
Figure 13 shows a detail of the elastics of the tensioning of the power transmission system (F).
Figures 14 and 15 show a side view of an embodiment of the elements of the power transmission system (F) which transfers power from the intermediate shaft (3) to the rear wheel (2) of the apparatus of the invention.

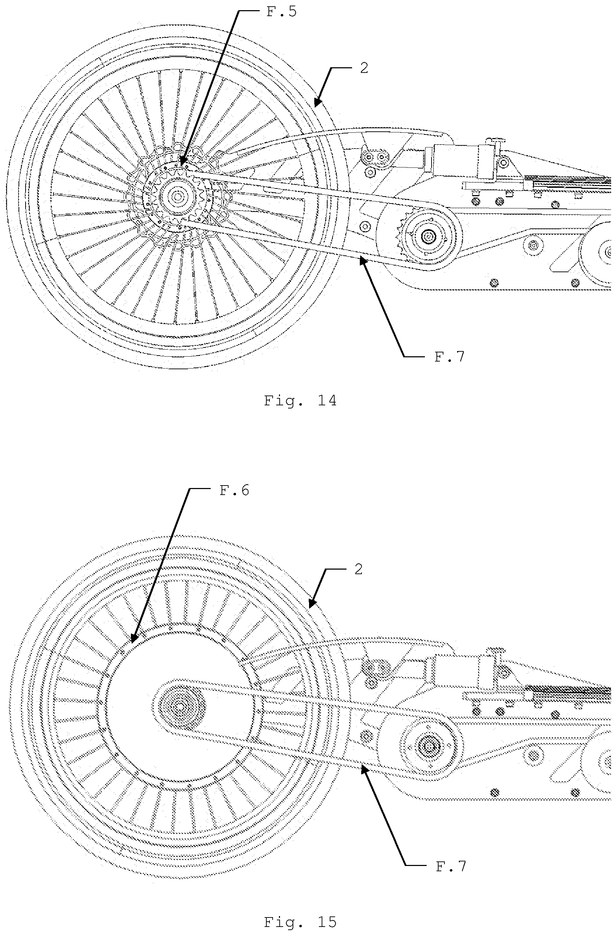

Figure 14 also shows a side view of a first embodiment of the rear hub of the apparatus of the invention.
Figure 15 shows a side view of a second embodiment of the rear hub of the apparatus of the invention.

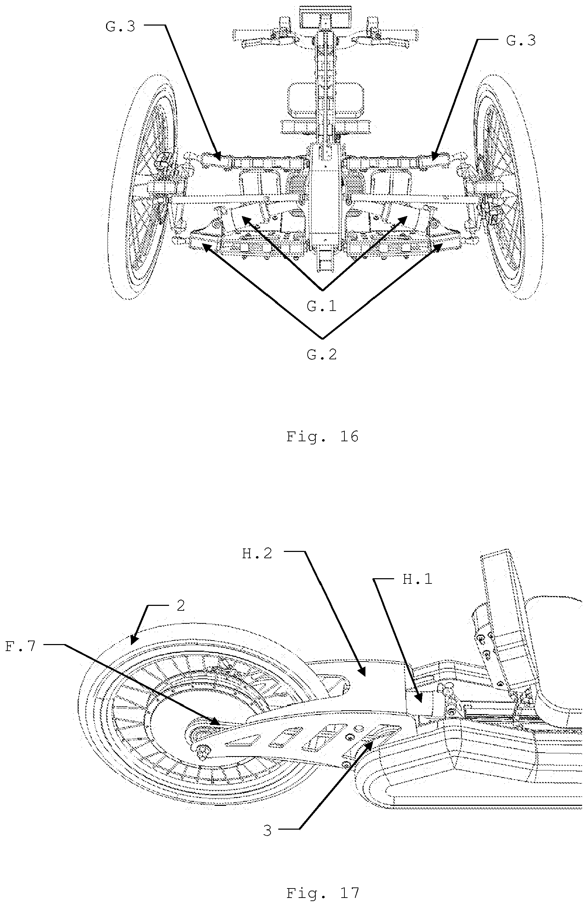

Figure 16 shows a front perspective view of an embodiment of the elements that that make up the front suspension system (G) of the apparatus of the invention.
Figure 17 shows a top perspective view of an embodiment of the components of the rear suspension system (H), the apparatus of the invention.

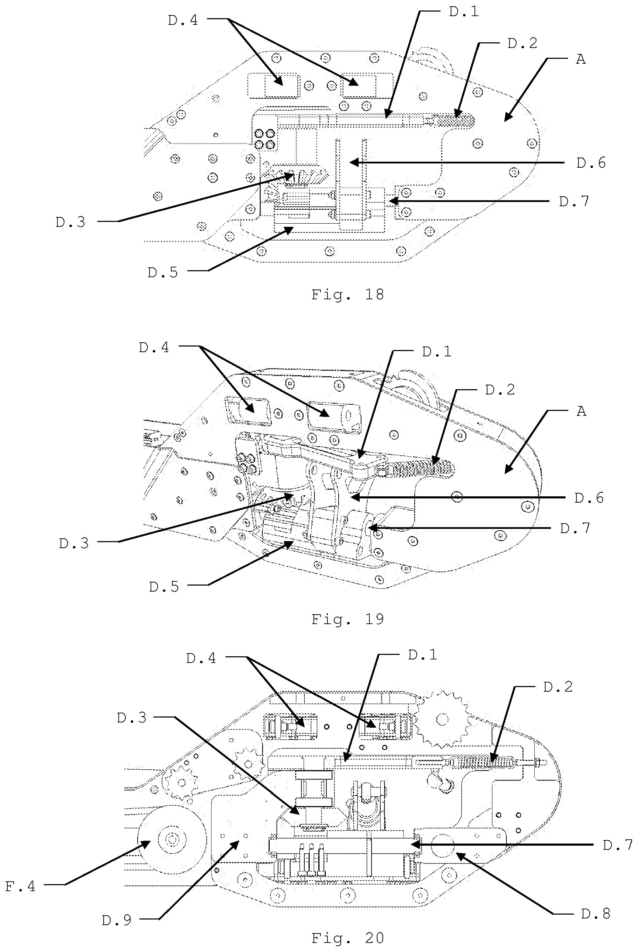

Figure 18 shows a side view of an embodiment of the steering system (D) of the apparatus of the invention.
Figure 19 shows a perspective view of an embodiment of the steering system (D) curved to the right, of the apparatus of the invention.
Figure 20 shows a side sectional view of an embodiment of the steering system (D) of the apparatus of the invention.

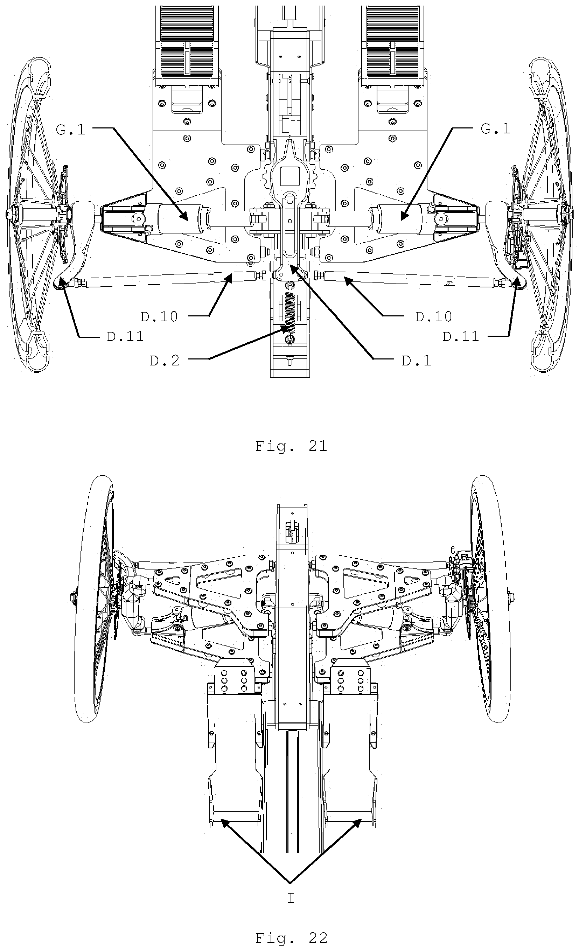

Figure 21 shows a detail of a sectional view from above of an embodiment of the steering system (D) of the apparatus of the invention.
Figure 22 shows a perspective view of a first embodiment of the footrest (R), the apparatus of the invention.

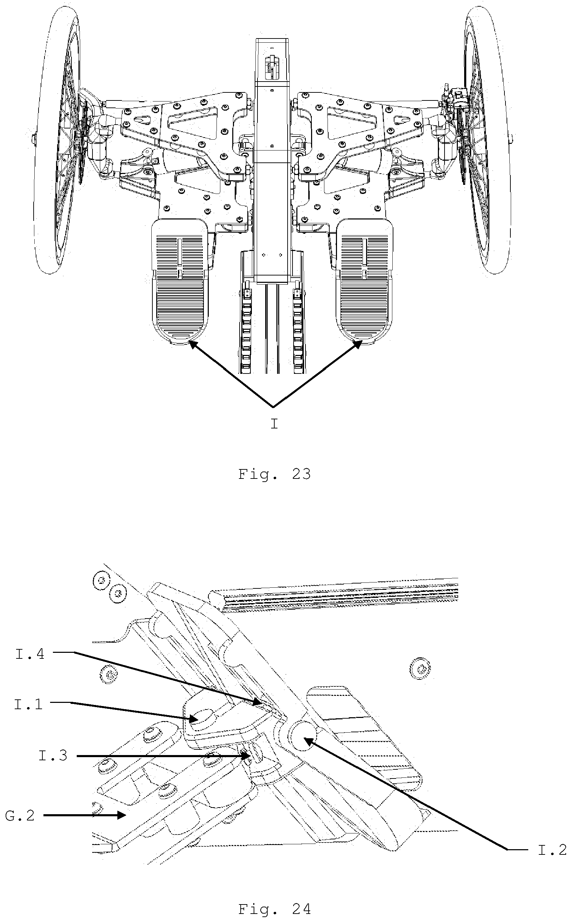

Figure 23 shows a perspective view of a second embodiment of the footrest (R) of the apparatus of the invention.
Figure 24 shows a perspective view of the adjustment systems of the footrest (R).

In the figures are visible their various components and accessories:
- front wheels (1), rear wheel (2) and intermediate shaft (3);
- main body (A);
- sliding seat (B) constituted by: base (B.1), stool (B.2), back support (B.3), propulsion rod (B.4) constituted by bars (B.4.1), upper bearings (B.4.2), intermediate bearings (B.4.3 and B.4.4) and fixing of the chain drive (B.4.5), lower bearings (B.5), skids (B.6) consisting of ball drive (B.6.1), guide (B.7) and mat (B.8) articulated for the passage of cables and hydraulic hoses;
- guiding system (C);
- steering system (D) constituted by: a steering arm (D.1), traction spring (D.2), bevel gears (D.3), support of the upper triangles (D.4), support of the lower triangles or pivoting element (D.5), supporting the dampers (D.6), longitudinal shaft (D.7), front bearing (D.8), rear bearing (D.9), risers (D.10) and shaft sleeves (D.11);
- handlebar (E) constituted by: handlebar levers (E.1), brake levers (E.2), monitor (E.3), reversing button (E.4), operating mode selector (E.5) and accelerator (E.6);
- power transmission system (F) constituted by: chain drive (F.1), gear ratio pulleys (F.2), connection element (F.3), pulleys (F.4), hub with internal variation of the transmission ratio (F.5), electric hub engine (F.6) and moving chain (F.7);
- front suspension system (G) constituted by: dampers (G.1), upper triangles (G.2) and lower triangles (G.3);
- rear suspension system (H) constituted by: damper (H.1) and swinging arm system (H.2);
- footrest (I) constituted by: vertical shaft (I.1), horizontal shaft (I.2) and mechanical stops (I.3 and I.4).

### Detailed Description of the Invention

The present invention relates to a hybrid human-powered equipment based on the characteristic rowing movement. It is an alternative means of transportation that enables individuals to perform physical activity in open spaces, or go from one place to another in an effective and amusing way. This vehicle is designed to travel on the street and on bicycle paths.

The terms "lateral", "upper" and "lower", "front", "front" and "back," "top" and "bottom", "upper" and "lower" used in the description are used for descriptive purposes and not necessarily for describing relative positions. It should be noted that the terms are used interchangeably in appropriate circumstances and that the embodiments of the invention described herein are capable of operating in other orientations than the described or illustrated herein. The terms "lateral", "upper" and "lower", "front", "front" and "back," "top" and "bottom", "upper" and "lower" are the positions perceived by the observer placed in front of the equipment.

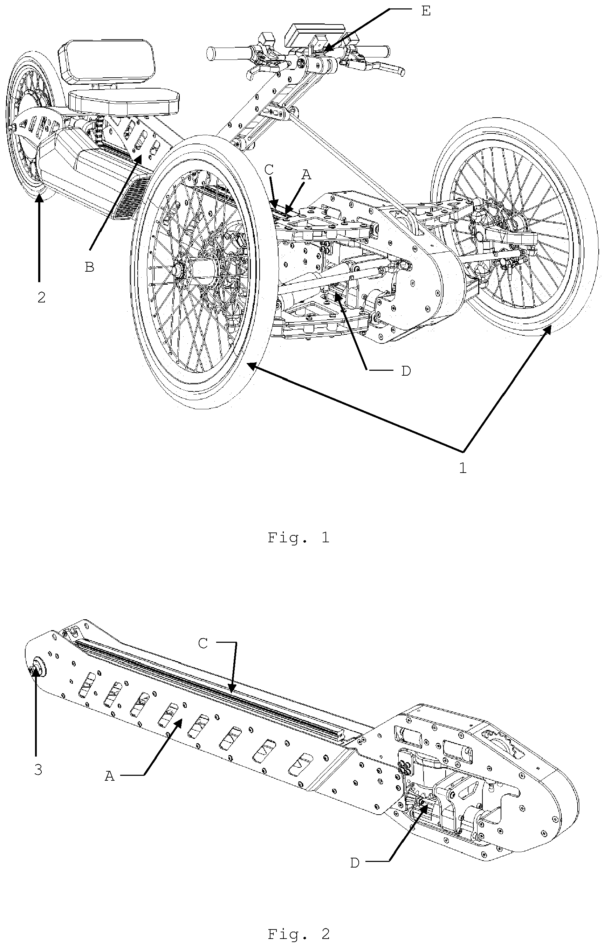

According to figure 1, the apparatus of the invention is a vehicle constituted by 3 wheels, two wheels (1) arranged at the front and one wheel (2) at the rear, the latter being the driving wheel. A main body (A) which is pivotal around a longitudinal shaft enabling the vehicle to attain a lateral slope to both sides of up to 20° with regard to the vertical. On the main body (A) is installed, on linear guides, a set designated as sliding seat (B) with substantially longitudinal movement in which the user sits assuming a driving position. In terms of driving the equipment presents two embodiments, one of them 100% mechanical and a hybrid version equipped with electric hub engine. The equipment is also made up of the transmission systems, suspension and steering (D).

According to Figure 2, the main body (A), which as the name suggests is the central part of the equipment, consists of two substantially parallel bars in which the sliding seat (B) lies and where are also installed the components of the guiding system (C) of the sliding seat (B) having at one end the intermediate shaft (3) which fits with the rear wheel strut (2), and at the other end, the steering system (D), the power transmission and corresponding components.

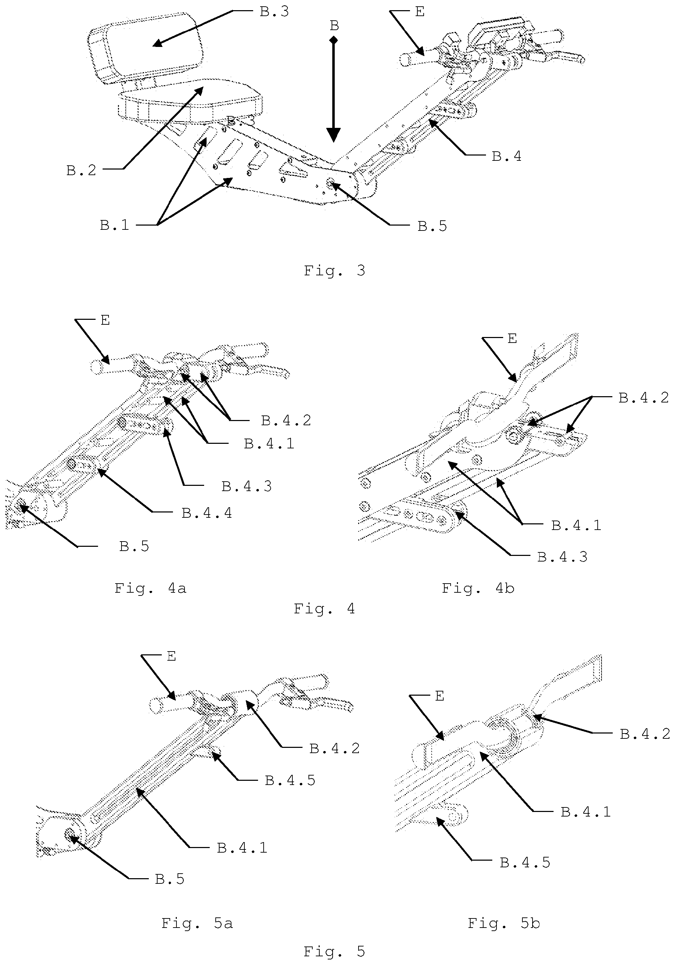

According to Figure 3, the sliding seat (B) is constituted by a base (B.1) comprising two substantially parallel bars at one end of which are placed the seat (B.2) and the back support (B.3). At the other end is the lower end of the thrust rod (B.4) that through a set of two lower bearings (B5), when performing the movement described below, causes the generation of power that will be transmitted the rear wheel, making the equipment move. The handlebar (E) is at the other end of the thrust rod (B4) .

According to Figure 4, in a first embodiment of the thrust rod (B4), the thrust rod (B.4) comprises two substantially parallel bars (B.4.1) that in the lower end have a set of two lower bearings (B.5) that allow the connection to the sliding seat (B), intermediate bearings (B.4.3 and B.4.4) located approximately at 1/3 and 2/3, respectively, whose purpose is simply to stiffen the mechanism and provide an attachment point for the driving chain (F.1) enabling the power output through the intermediate bearing (B.4.3) and that at the upper end has an element which includes a set of two upper bearings (B.4.2) which allow connection to the handlebar (E).

This mechanism of bars that are parallel and articulated between each other allow the thrust rod (B.4) to describe a curved path around the lower bearings (B.5) for fixing the sliding seat (B) maintaining the angular position of the handlebar (E) and of the elements therein constant throughout the trajectory, avoiding, thus, the angular slanting of the wrists of the user.

According to Figure 5, in a second embodiment of the thrust rod (B4), the thrust rod (B.4) comprises a bar (B.4.1) which has at the lower end a lower bearing (B.5) that allows the connection with the sliding seat (B) and by fixing the driving chain (B.4.5) located approximately at 1/3 and whose purpose is the power output, which at the upper end has an upper bearing (B.4.2) that allows the connection to the handlebar (E).

In a first embodiment of the handlebar (E), the handlebar (E) is constituted by the steering levers (E.1) and the brake levers (E.2).

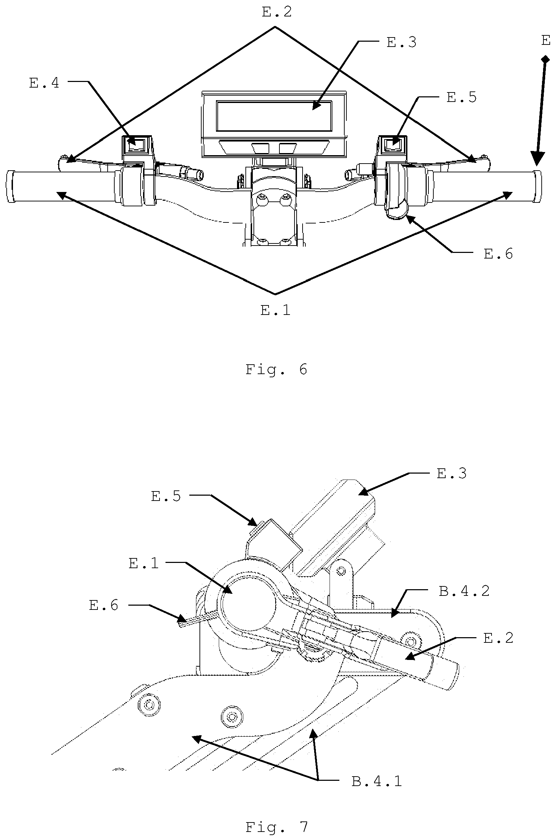

According to figures 6 and 7, in a second embodiment of the handlebar (E), the handlebar (E) is constituted by the steering levers (E.1), the brake levers (E.2), the monitor (E.3) button for reversing (E.4), operating mode selector (E.5) and accelerator (E.6).

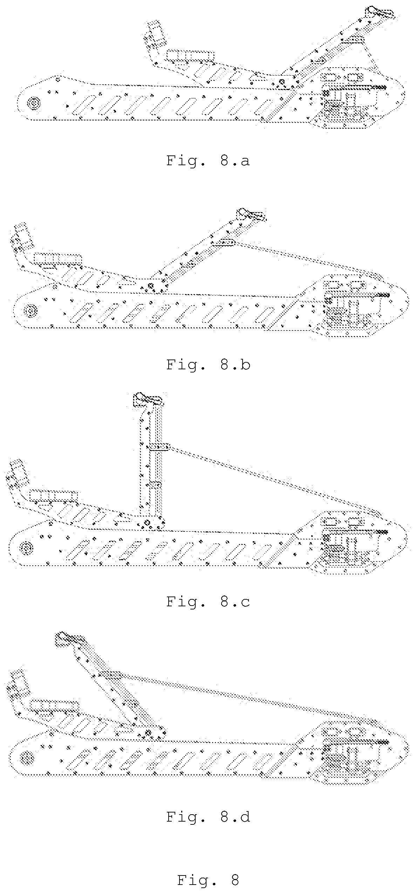

According to Figure 8 the movement of the sliding seat (B), decomposed into four stages, is carried out as follows:
- attack position (as Figure 8.a)
   o the base (B.1) and the thrust rod (B.4) form between them an obtuse angle with maximum amplitude;
   o the user is with outstretched arms and bent legs;
- thrust stage (as shown in figure 8b)
   o the base (B.1) and the thrust rod (B.4) continue to describe an obtuse angle in relation to each other;
   o the user continues with outstretched arms and begins to stretch his of her legs until they are fully extended;
- output stage (as figures 8.c and 8.d)
   o the user with the legs already fully extended, begins to flex the torso backwards, while he or she begins to bend the arms;
   o when the user already has the torso fully bent backwards, i.e. when the back is already resting against the dorsal support (B.3) and the arms are semi-bent, the base (B.1) and the thrust rod (B.4) describe between each other a substantially right angle;
   o the user continues to flex the arms, and the base (B.1) and the thrust rod (B.4) start to describe an acute angle between each other;
   o the end position is reached when the user has fully bent arms, i.e. the base (B.1) and the thrust rod (B.4) form between each other an acute angle with minimum amplitude;
- recovery stage
   o the equipment recovers from the final position to the initial position, i.e. the base (B.1) and the thrust rod (B4), which describe between them an acute angle with minimum amplitude, recover to the position in which they describe between them an obtuse angle with maximum amplitude;
   o the user goes from the bent arms position to the outstretched arms position and from the stretched legs position to the bent legs position.

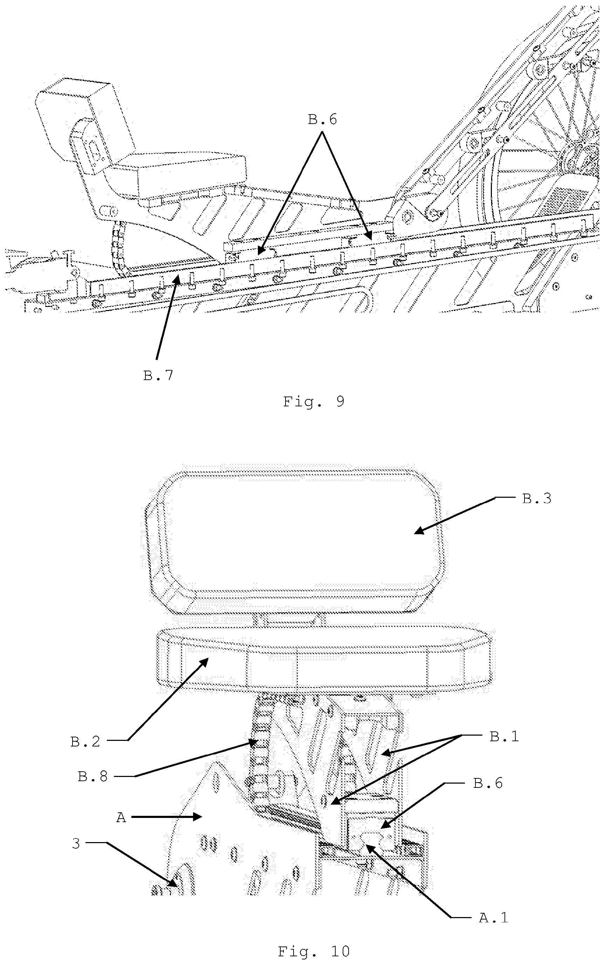

According to figures 9, 10 and 11, the sliding seat (B) has on its lower portion, i.e. the one that is directly on the central body (A), a guiding system (C) constituted by a series of skids (B.6) formed by a ball drive (B.6.1) which when fitted in the rail (A.1) by partial clamping, only ensures the substantially linear movement of the sliding seat (B) along the rail (A.1). A hinged mat (B.8) allows the passage of cables and hydraulic pipes.

It is the above movement that allows the vehicle to move, that is, the movement that is necessary for the generated energy by movement of the sliding seat (B) be transmitted to the driving wheel, that is, the rear wheel (2).

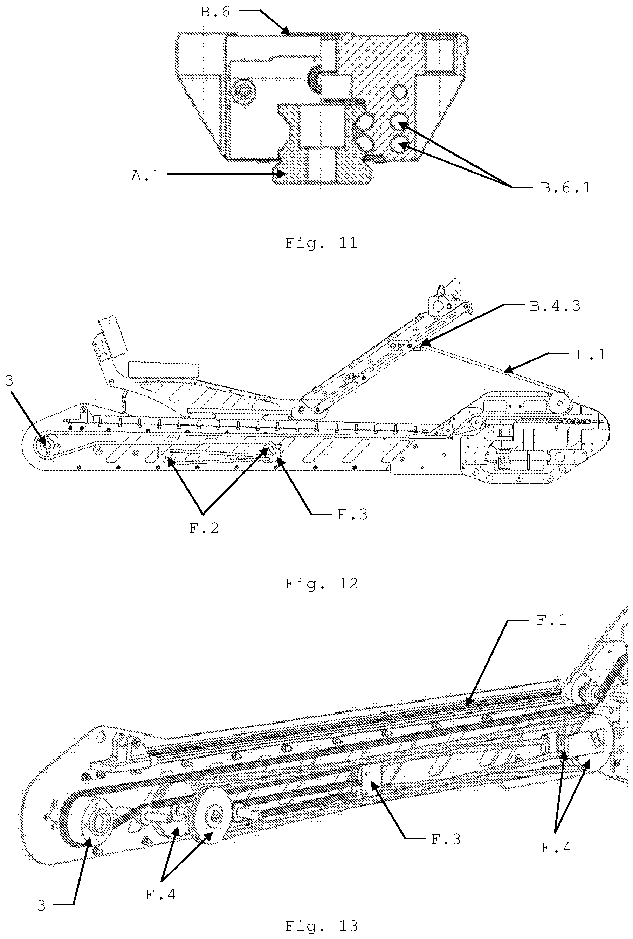

According to figure 12, this transmission is effected through a power transmission system (F) through a two-stage chain.

The chain element of the first stage referred to as the driving chain (F.1) connects the sliding seat (B) to the intermediate shaft (3).

In a first embodiment, this connection is made from the intermediate bearing (B.4.3) which is closer to the handlebar, while in a second embodiment, the connection is made from the point of attachment of the chain (B.4.5).

To implement the above movement, about 1.4 m of chain is required due to the displacement of the sliding seat (B). This chain drive (F.1) is stored inside the main body (A) in a mechanism referred to as "Chain Deposit" consisting of a pretensioned pulley gearing mechanism (F.2) which allows to absorb approximately 1.4m current in a length of approximately 0.5 m.

According to Figure 13, in order to ensure the pre-tensioning of the "Chain Deposit" were tensioned elastics were installed between 4 pulleys (F.4) installed at the ends of the main body (A) being the elastic connected to the drive chain (F.1) through the connecting element (F.3).

According to figures 14 and 15 the power transmission between the intermediate shaft (3) and the rear wheel (2) is carried out by a chain known as power driven chain (F.7). The intermediate shaft (3) is equipped with a freewheel mechanism that allows the machine to move backwards without dragging the sliding seat (B).

According to figure 14, in a first embodiment, the apparatus of the invention is fully mechanical and, as such, the hub with internal variation of the transmission gear (F.5) is installed in the hub of the rear wheel (2).

According to Figure 15, in a second embodiment, the apparatus of the invention is hybrid, that is, it has an electric engine that can assist the user should he or she so desire, in which case the hub with internal variation of the ration of transmission installed on the intermediate shaft (3) since the installation of electric motor hub (F.6) occupies the rear wheel hub (2).

In any of the previously described embodiments, the user can opt for a gear changes system or alternatively for a system with a continuously variable transmission.

According to figures 16 and 17, the apparatus of the invention is equipped with an independent suspension in 3 wheels.

According to figure 16, in the front wheels of a dual triangle suspension system was installed, formed by dampers (G.1) upper triangles (G.2) and lower triangles (G.3).

According to figure 17 for the rear suspension was adopted a damper unit (H.1) integrated into a rocker arm system (H.2) which articulates on the intermediate shaft (3).This assembly ensures a constant distance between centers (wheel - intermediate shaft) during the operation of the suspension, eliminating the need for the driven chain tensioner (F.7).

According to figures 18, 19, 20 and 21 the steering system is constituted by the steering arm (D.1), the traction spring (D.2), bevel gears (D.3), support of the upper triangles (D.4) support of the lower triangles or pivoting element (D.5), supporting the dampers (D.6), longitudinal shaft (D.7), bearing (D.8), bearing (D.9), rods (D.10) and stub shaft (D.11). The pivoting element (D5) of the main body (A) which articulates with the main body (A) by means of the front bearing (D8) and the rear bearing (D9) is maintained substantially horizontal by the action of the two dampers (G.1) installed in the lower triangles (G.3) . The angular movement of the main body is triggered by the user action, and this relative angular movement between the pivoting member and the main body transmitted to the steering arm (D.1) by means of two bevel gears (D.3) inducing the rotation thereof. The steering arm (D.1) is connected to the stub shafts (D.11) in which are mounted the two front wheels (1) via two rods (D.10). The return to the central position is aided by the traction spring (D.2).

According to the figure 22 and 23, and in order to provide two perfectly distinct experiments using the same vehicle, there are two possible embodiments for the footrest (I).

According to figure 22, in a first embodiment, the footrest (I) is integral with the main body (A). In this embodiment, it is necessary to increase the preload on the compensating spring (D.2) in the direction system (D), being the conduction exclusively performed by the transfer of mass transfer by the user.

According to figure 23, in a second embodiment, the footrest (I) is outside the main body (A), attached to the lower triangles (G.3). In this embodiment, the user has a support point on each foot outside the pivotable system in order to generate moment in relation to the longitudinal shaft making this embodiment more peaceful the use of the vehicle more friendly.

According to figure 24 and in order to provide greater comfort to the user, two degrees of freedom have been introduced to the footrests (I) around the vertical shaft (I.1) and the horizontal shaft (I.2). Both shafts have mechanical stops (I.3 and I.4) with pitch to be customized by the user. The vertical shaft (I.1) allows the variation of +/- 5°, the horizontal shaft (I.2) enables the variation between 20° and 45° in relation to the ground.

## Claims

1. Exercise and locomotion vehicle constituted by: a main body (A), a sliding seat (B) a guidance system (C), a steering system (D), a handlebar (E), a power transmission system (F) a front suspension system (G), a rear suspension system (H), a footrest (I) wherein:
- a thrust rod (B.4) describes a curved path around lower bearings (B.5) for fixing the sliding seat (B) maintaining the angular position of the handlebar (E) constant throughout the trajectory;
- an angular movement of the main body is triggered by user action; **characterized by**:
- the relative angular movement between a pivoting element and the main body that triggers a steering arm (D.1) by means of two bevel gears (D.3) inducing the rotation of the same;
- the power transmission system (F) constituted by: a drive chain (F.1), a pulley gear ratio (F.2), a connecting element (F.3), pulleys (F.4), a hub with internal variation of the transmission ratio (F.5), an electric hub engine (F.6) and a moved chain (F.7).

2. Exercise and locomotion vehicle according to claim 1 wherein a driving wheel is a rear wheel (2).

3. Exercise and locomotion vehicle according to claim 1 wherein the sliding seat (B) consists of: a base (B.1), a stool (B.2), a dorsal support (B.3), the thrust rod (B.4) constituted by bars (B.4.1), upper bearings (B.4.2), intermediate bearings (B.4.3 and B.4.4) and a fixing chain drive (B.4.5), the lower bearings (B.5), skids (B.6) constituted by a drive ball (B.6.1), a guide (B.7) and a belt (B.8) articulated for the passage of cables and hydraulic pipes.

4. Exercise and locomotion vehicle according to claim 1 wherein the guidance system (C) is constituted by a set of skids (B.6) formed by a ball drive (B.6.1) and a rail (A.1).

5. Exercise and locomotion vehicle according to claim 1 wherein the steering system (D) is constituted by: the steering arm (D.1), a traction spring (D.2), bevel gears (D3), a support of the upper triangles (D.4), a support of the lower triangles or the pivoting element (D.5), a support of the dampers (D.6), a longitudinal shaft (D.7), a front bearing (D.8), a rear bearing (D.9), risers (D.10) and stub shafts (D.11).

6. Exercise and locomotion vehicle according to claim 1 wherein the handle (E) is constituted by: handlebar levers (E.1), brake levers (E.2), a monitor (E.3), a reversing button (E.4), an operating mode selector (E.5) and an accelerator (E.6) .

7. Exercise and locomotion vehicle according to claim 1 wherein the front suspension system (G) is constituted by: dampers (G.1), upper triangles (G.2) and lower triangles (G.3).

8. Exercise and locomotion vehicle according to claim 1 wherein the rear suspension system (H) is constituted by a damper: a bumper (H.1) and a swinging arm system (H.2) being articulated in an intermediate shaft (3).

9. Exercise and locomotion vehicle according to claim 1 wherein the footrest (I) is constituted by: a vertical shaft (I.1), a horizontal shaft (I.2) and mechanical stops (1.3 and 1.4).

10. Exercise and locomotion vehicle according to the preceding claims wherein the energy required for the locomotion of the vehicle is generated by the linear motion of the sliding seat (B) upon activating the drive chain (F.1).

11. Exercise and locomotion vehicle according to claim 4, wherein the linear movement of the sliding seat (B) is ensured by interlocking the set of skids (B.6) on the rail (A.1) by partial clamping.

12. Exercise and locomotion vehicle according to claim 1, wherein the transmission is effected through the power transmission system (F) with a chain in two stages:
- in the first stage the drive chain (F.1) transmits the movement of the sliding seat (B) an intermediate shaft (3);
- in the second stage the movement is transmitted by the moved chain (F.7) of the intermediate shaft (3) to the driving wheel.

13. Exercise and locomotion vehicle according to claim 5 wherein the pivoting element (D5) of the main body (A) which articulates with the main body (A) by means of the front bearing (D8) and the rear bearing (D.9) is kept substantially horizontal as a result of the action of two dampers (G.1) installed in lower triangles (G.3).

14. Exercise and locomotion vehicle according to claim 8 or 12, wherein the intermediate shaft (3) is provided with a freewheel mechanism which allows the backward movement of the apparatus without dragging the sliding seat (B).

## Patentansprüche

1. Übungs- und Fortbewegungsfahrzeug, bestehend aus: einem Hauptkörper (A), einem Schiebesitz (B), einem Führungssystem (C), einem Lenksystem (D), einer Lenkstange (E), einem Kraftübertragungssystem (F), einem vorderen Federungssystem (G), einem hinteren Federungssystem (H), einer Fußstütze (I), wobei:
- eine Schubstange (B.4) eine Kurvenbahn um die unteren Lager (B.5) beschreibt, um den Schiebesitz (B) zu fixieren und die Winkelstellung der Lenkstange (E) konstant über die gesamte Bewegungsbahn zu erhalten;
- eine Winkelbewegung des Hauptkörpers durch die Aktion des Benutzers ausgelöst wird; **dadurch gekennzeichnet, dass**:
- die relative Winkelbewegung zwischen einem schwenkbaren Element und dem Hauptkörper, welche einen Lenkhebel (D.1) über zwei Kegelräder (D.3) bewegt, die Drehung desselben verursacht;
- das Kraftübertragungssystem (F) aus einer Antriebskette (F.1), einer Riemenscheiben-Übersetzung (F.2), einem Verbindungselement (F.3), Riemenscheiben (F.4), einer Nabe mit interner Variation des Übersetzungsverhältnisses (F.5), einem elektrischen Nabenmotor (F.6) und einer bewegten Kette (F.7) besteht.

2. Übungs- und Fortbewegungsfahrzeug gemäß Anspruch 1, wobei das Antriebsrad ein Hinterrad (2) ist.

3. Übungs- und Fortbewegungsfahrzeug gemäß Anspruch 1, wobei der Schiebesitz (B) aus einem Unterbau (B.1), einem Stuhl (B.2), einer Rückenhalterung (B.3), der Schubstange (B.4), bestehend aus Stegen (B.4.1), den oberen Lagern (B.4.2), den Zwischenlagern (B.4.3 und B.4.4) und einem fixierenden Kettentrieb (B.4.5), den unteren Lagern (B.5), Kufen (B.6), bestehend aus einem Kugelantrieb (B.6.1), einer Führung (B.7) und einem Band (B.8), das für den Durchgang von Kabeln und Hydraulikschläuchen artikuliert ist, besteht.

4. Übungs- und Fortbewegungsfahrzeug gemäß Anspruch 1, wobei das Führungssystem (C) aus einem Satz von Kufen (B.6.) besteht, die durch einen Kugelantrieb (B.6.1) und eine Schiene (A.1) gebildet sind.

5. Übungs- und Fortbewegungsfahrzeug gemäß Anspruch 1, wobei das Lenksystem (D) aus dem Lenkhebel (D.1), einer Zugfeder (D.2), Kegelrädern (D3), einem Halter für die oberen Dreiecke (D.4), einem Halter für die unteren Dreiecke oder das schwenkbare Element (D.5), einem Halter für die Stoßdämpfer (D.6), einer Längswelle (D.7), einem vorderen Lager (D.8), einem hinteren Lager (D.9), Steigrohren (D.10) und Achsstummeln (D.11) besteht.

6. Übungs- und Fortbewegungsfahrzeug gemäß Anspruch 1, wobei die Lenkstange (E) aus den Stangengriffen (E.1), Bremshebeln (E.2), einem Monitor (E.3), einer Rückfahrtaste (E.4), einem Betriebsartenwahlschalter (E.5) und einem Beschleuniger (E.6) besteht.

7. Übungs- und Fortbewegungsfahrzeug gemäß Anspruch 1, wobei das vordere Federungssystem (G) aus Stoßdämpfern (G), oberen Dreiecken (G.2) und unteren Dreiecken (G.3) besteht.

8. Übungs- und Fortbewegungsfahrzeug gemäß Anspruch 1, wobei das hintere Federungssystem (H) aus einem Stoßdämpfer, einem Stoßfänger (H.1) und einem Schwenkarmsystem (H.2) besteht, welches in einer Zwischenwelle (3) artikuliert wird.

9. Übungs- und Fortbewegungsfahrzeug gemäß Anspruch 1, wobei die Fußstütze (I) aus einer vertikalen Welle (1.1), einer horizontalen Welle (1.2) und mechanischen Anschlägen (1.3 und 1.4) besteht.

10. Übungs- und Fortbewegungsfahrzeug gemäß den vorherigen Ansprüchen, wobei die für die Fortbewegung des Fahrzeugs erforderliche Energie durch die lineare Bewegung des Schiebesitzes (B) über die Aktivierung der Antriebskette (F.1) erzeugt wird.

11. Übungs- und Fortbewegungsfahrzeug gemäß Anspruch 4, wobei die lineare Bewegung des Schiebesitzes (B) durch die Verriegelung des Kufensatzes (B.6) auf der Schiene (A.1) über die teilweise Klemmung gewährleistet wird.

12. Übungs- und Fortbewegungsfahrzeug gemäß Anspruch 1, wobei die Übertragung durch das Kraftübertragungssystem (F) mit einer Kette in zwei Phasen bewirkt wird:
- in der ersten Phase überträgt die Antriebskette (F.1) die Bewegung des Schiebesitzes (B) auf eine Zwischenwelle (3) ;
- in der zweiten Phase wird die Bewegung durch die bewegte Kette (F.7) von der Zwischenwelle (3) auf das Antriebsrad übertragen.

13. Übungs- und Fortbewegungsfahrzeug gemäß Anspruch 5, wobei das schwenkbare Element (D5) des Hauptkörpers (A), welches mit dem Hauptkörper (A) mittels des vorderen Lagers (D.8) und des hinteren Lagers (D.9) artikuliert, aufgrund der Wirkung der beiden Stoßdämpfer (G.1), die in den unteren Dreiecken (G.3) installiert sind, wesentlich horizontal gehalten wird.

14. Übungs- und Fortbewegungsfahrzeug gemäß Anspruch 8 oder 12, wobei die Zwischenwelle (3) mit einem Freilaufmechanismus versehen ist, der die Rückwärtsbewegung des Geräts ohne das Ziehen des Schiebesitz (B) erlaubt.

## Revendications

1. Véhicule d'exercice et de locomotion constitué de : une structure principale (A), un siège coulissant (B) un système de guidage (C), un système de direction (D), un guidon (E), un système de transmission de puissance (F) un système de suspension avant (G), un système de suspension arrière (H), un repose-pied (I) dans lequel :
- une bielle de poussée (B.4) décrit une trajectoire courbe autour des paliers inférieurs (B.5) pour fixer le siège coulissant (B) en conservant constante la position angulaire du guidon(E) tout au long de la trajectoire ;
- le mouvement angulaire de la structure principale est déclenché par l'action de l'utilisateur ; **caractérisé par** :
- le mouvement angulaire relatif entre un élément pivotant et le corps principal qui déclenche un bras de direction (D.1) au moyen de deux pignons coniques (D.3) entrainant la rotation de celui-ci ;
- le système de transmission de puissance (F) constitué par : une chaine de transmission (F.1), un rapport de démultiplication (F.2), un élément de connexion (F.3), des poulies (F.4), un moyeu avec variation interne du rapport de transmission (F.5), un moteur à moyeu électrique (F.6) et une chaine d'entrainement (F.7).

2. Véhicule d'exercice et de locomotion selon la revendication 1 dans lequel la roue motrice est une roue arrière (2).

3. Véhicule d'exercice et de locomotion selon la revendication 1 dans lequel le siège coulissant (B) consiste en : une base (B.1), une assise (B.2), un support dorsal (B.3), la bielle de poussée (B.4) constituée de barres (B.4.1), de paliers supérieurs (B.4.2), de paliers intermédiaires (B.4.3 et B.4.4) et une transmission par chaine de fixation (B.4.5), les paliers inférieurs (B.5), des patins (B.6) constitués avec un roulement à billes (B.6.1), un guide (B.7) et une courroie (B.8) articulée pour le passage de câbles et de tuyaux hydrauliques.

4. Véhicule d'exercice et de locomotion selon la revendication 1 dans lequel le système de guidage (C) est constitué d'un jeu de patins (B.6) formé par un roulement à billes (B.6.1) et un rail (A.1).

5. Véhicule d'exercice et de locomotion selon la revendication 1 dans lequel le système de direction (D) est constitué par : le bras de direction (D.1), un ressort de traction (D.2), des pignons coniques (D3), un support des triangles supérieurs (D.4), un support des triangles inférieurs ou l'élément pivotant (D.5), un support des amortisseurs (D.6), un axe longitudinal (D.7), un palier avant (D.8), un palier arrière (D.9), des montants (D.10) et des axes de transmission (D.11).

6. Véhicule d'exercice et de locomotion selon la revendication 1 dans lequel le guidon (E) est constitué de : poignées de guidon (E.1), poignées de freins (E.2), un écran (E.3), un bouton de recul (E.4), un sélecteur de mode de fonctionnement (E.5) et un accélérateur (E.6).

7. Véhicule d'exercice et de locomotion selon la revendication 1 dans lequel le système de suspension avant (G) est constitué de : amortisseurs (G.1), triangles supérieurs (G.2) et triangles inférieurs (G.3).

8. Véhicule d'exercice et de locomotion selon la revendication 1 dans lequel le système de suspension arrière (H) est constitué d'un amortisseur : un pare-chocs (H.1) et un système de bras pivotant (H.2) étant articulés dans un axe intermédiaire (3).

9. Véhicule d'exercice et de locomotion selon la revendication 1 dans lequel le repose-pied (I) est constitué de : un axe vertical (I.1), un axe horizontal (I.2) et des butées mécaniques (I.3 et I.4).

10. Véhicule d'exercice et de locomotion selon les revendications précédentes dans lequel l'énergie requise pour la locomotion du véhicule est générée par le mouvement linéaire du siège coulissant (B) lors de l'activation de la chaine d'entrainement (F.1).

11. Véhicule d'exercice et de locomotion selon la revendication 4, dans lequel le mouvement linéaire du siège coulissant (B) est assuré par l'enclenchement du jeu de patins (B.6) sur le rail (A.1) par fixation partielle.

12. Véhicule d'exercice et de locomotion selon la revendication 1, dans lequel la transmission est effectuée via le système de transmission de puissance (F) avec une chaine en deux étapes :
- lors de la première étape la chaine de transmission (F.1) transmet le mouvement du siège coulissant (B) à un axe intermédiaire (3) ;
- lors de la seconde étape le mouvement est transmis par le déplacement de la chaine (F.7) de l'axe intermédiaire (3) à la roue motrice.

13. Véhicule d'exercice et de locomotion selon la revendication 5 dans lequel l'élément pivotant (D5) de la structure principale (A) qui s'articule avec la structure principale (A) au moyen du palier avant (D8) et du palier arrière (D.9) est maintenu substantiellement horizontal comme résultat de l'action de deux amortisseurs (G.1) installés dans les triangles inférieurs (G.3).

14. Véhicule d'exercice et de locomotion selon la revendication 8 ou 12, dans lequel l'axe intermédiaire (3) est pourvu d'un mécanisme de roue libre qui permet le déplacement vers l'arrière de l'appareil sans entraîner le siège coulissant (B).
